# EUROPEAN PATENT APPLICATION

(11) **EP 4 556 413 A1**
(43) Date of publication of application: **21.05.2025**
(21) Application number: 24212021.0
(22) Date of filing: 11.11.2024
(51) Int. Cl.: B65G 47/08, B65G 47/82, B65G 65/00, B65B 7/28, B65G 47/68, B65G 25/02

(54) **APPARATUS AND METHOD FOR FEEDING ARTICLES TO A PICKUP STATION**

(30) Priority: 16.11.2023 IT 202300024258
(71) Applicant: G.D S.p.A., 40133 Bologna (IT)
(72) Inventor: GAUDENZI, Fabio, Bologna (IT); MORETTI, Carlo, Bologna (IT)
(74) Representative: Bianciardi, Ezio

(57) **Abstract**

Described is an apparatus (1) for feeding articles (A) to a pickup station (ST), comprising:
- a conveyor (2) comprising a plurality of parallel feed lines (L1, L2, L3, L4), each feed line (L1, L2, L3, L4) being configured to contain a plurality of sequentially disposed articles (A) and being provided with a respective terminal end (T1, T2, T3, T4);
- a first movable element (3), disposed at the terminal end of the feed lines (L1, L2, L3, L4) and provided with a plurality of first seats (S1) for receiving articles (A);
- a second movable element (4), disposed at the terminal end of the feed lines (L1, L2, L3, L4) and provided with a plurality of second seats (S2) for receiving articles (A),

the first and the second movable elements (3, 4) being configured to move, relative to each other, in predetermined sync sideways and away from the terminal ends (T1, T2, T3, T4) of the feed lines (L1, L2, L3, L4), on paths (PS1, PS2) which at least partly overlap, to allow picking up articles (A) from the feed lines (L1, L2, L3, L4) at an article (A) receiving position (P1), and to allow releasing articles (A) to the pickup station (ST) at an article (A) releasing position (P2) located laterally with respect to the article (A) receiving position (P1),
one between the first and the second movable element (3, 4) being configured to be disposed at a retracted, away position (P3) at least during the movement of the other between the first and the second movable element (4,3) from the pickup position (P1) to the releasing position (P2) of the articles (A).

## Description

This invention relates to an apparatus and a method for feeding articles to a station for picking up articles.

The articles may comprise, for example, by way of a non-limiting example, caps of containers (e.g. bottles), in particular of the pharmaceutical sector. More generally speaking, the articles can also consist of objects having different geometries or shapes.

For this reason, the proposed feeding apparatus and method may be applied to a plurality of systems, for example systems for making packages, flasks, bottling, etc.

In the sector in question, there is a strongly felt need for providing systems for feeding articles to pickup stations which can allow articles to be singled out (that is to say, separating them from the remaining articles), so that they can be picked up, individually, at the pickup station.

In particular, a strongly felt need is that of being able to pick up articles at the pickup station in a fixed and predetermined position.

In that way, the overall structure of the system, in particular of the pickup station, is greatly simplified: in effect, it is possible to use picking up devices such as mechanical arms or elements which pick up the articles always in a same predetermined position, without the need to use sophisticated picking up devices which perform the picking up in a very wide range of conditions.

The aim of this invention is therefore to satisfy the above-mentioned need, that is to say, to provide an apparatus and a method for feeding articles to a pickup station which are simple, reliable and, at the same time, can allow picking up under substantially repetitive conditions.

Further features and advantages of the invention are more apparent from the exemplary, hence non-limiting description which follows of a preferred, but non-exclusive embodiment of a splicing apparatus as illustrated in the accompanying drawings, in which:
- Figures 1A to 12A illustrate perspective views of the feeding apparatus according to the invention in different operating steps;
- Figures 1B to 12B illustrate plan views of the feeding apparatus according to the invention in different operating steps, corresponding to those of Figures 1A-12A;
- Figure 1C shows an enlarged detail from Figure 1A.

The reference numeral 1 denotes an apparatus 1 for feeding articles A to a pickup station ST, comprising:
- a conveyor 2 comprising a plurality of parallel feed lines L1, L2, L3, L4, each feed line L1, L2, L3, L4 being configured to contain a plurality of sequentially disposed articles A and being provided with a respective terminal end T1, T2, T3, T4;
- a first movable element 3, disposed at the terminal end of the feed lines L1, L2, L3, L4 and provided with a plurality of first seats S1 for receiving articles A;
- a second movable element 4, disposed at the terminal end of the feed lines L1, L2, L3, L4 and provided with a plurality of second seats S2 for receiving articles A.

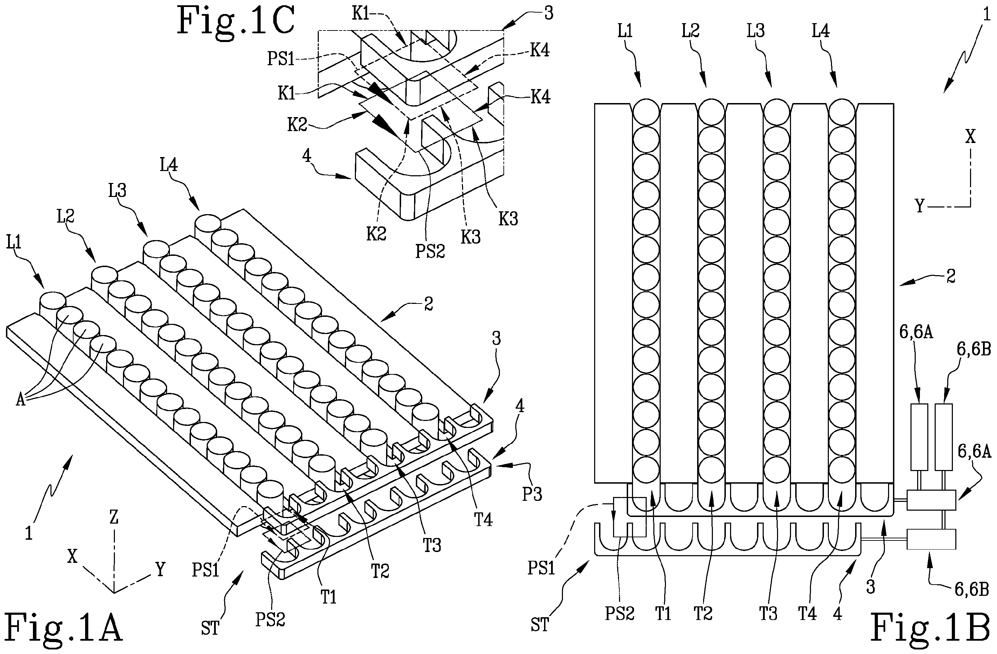

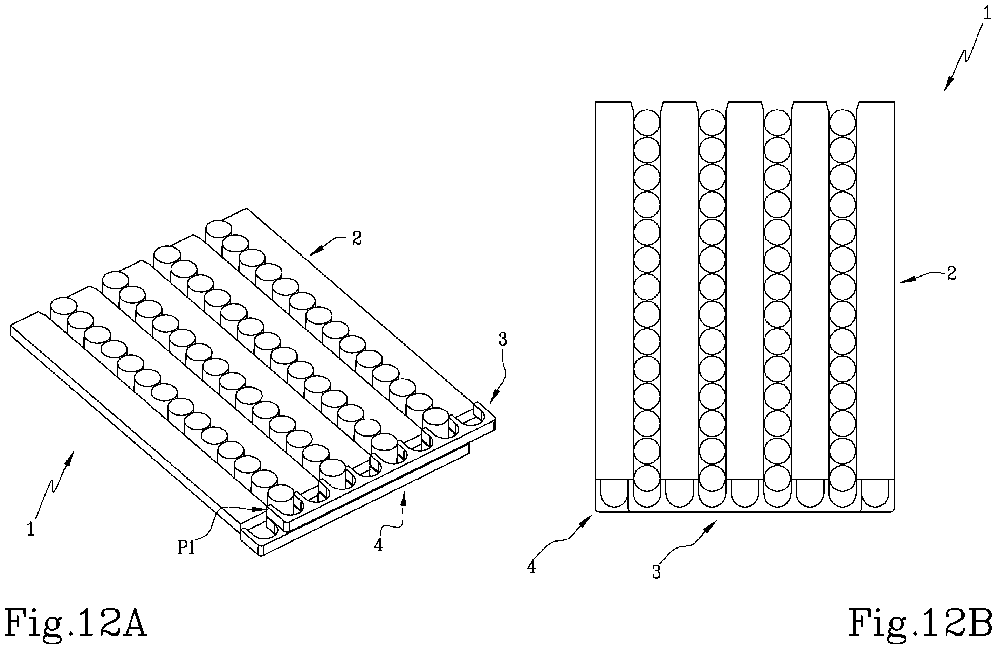

It should be noted that in the example illustrated in Figures 1A-12A and 1B-12B there are 4 feed lines L1, L2, L3, L4 illustrated.

In these feed lines L1, L2, L3, L4, as shown in the accompanying Figures 1A-12A and 1B-12B, the articles A are fed along a predetermined direction X.

It should be noted that the feed lines L1, L2, L3, L4 extend along the direction X.

The articles are fed along the feed lines L1, L2, L3, L4 in rows, that is to say, one behind the other along the predetermined conveying direction X. It should be noted that the feed lines L1, L2, L3, L4 are defined by side walls P1, P2, P3, P4, P5 on the right and left.

In particular, each feed line L1, L2, L3, L4 is defined by a right-hand wall and a left-hand wall.

The central feed lines L2, L3 have a wall (right and/or left) in common with other feed lines.

Preferably, the apparatus 1 comprises vibrating means (not illustrated) associated with the feed lines L1, L2, L3, L4, to allow the articles A to be moved along the lines.

It will be understood that the articles A can be fed along the feed lines L1, L2, L3, L4 in a plurality of modes (pushed by pushing devices, driven by a belt, etc.).

According to another aspect, the first and the second movable elements 3, 4 are configured to move in predetermined sync sideways and away from the terminal ends T1, T2, T3, T4 of the feed lines L1, L2, L3, L4, on paths PS1, PS2 which at least partly overlap, to allow picking up articles A from the feed lines L1, L2, L3, L4 at an article A receiving position P1, and to allow releasing articles A to the pickup station ST at an article A releasing position P2 located laterally with respect to the article A receiving position P1.

It should be noted that the position P1 for receiving articles A and position P2 for releasing articles A are, for each of the first element or second movable elements 3, 4, fixed in space, that is to say, always the same.

In short, it should be noted that the first and second movable elements 3, 4 are actuated, in a coordinated fashion, as described in more detail below.

It should be noted that the expression the first and second movable elements 3, 4 are configured to move, according to a predetermined relationship (hereinafter also referred to as "synchronised"), laterally and away from the terminal ends T1, T2, T3, T4 of the feed lines L1, L2, L3, L4 does not necessarily mean that the first and second movable elements 3 must be moved simultaneously, but on the contrary it means that there must be a relationship between the position of one and the position of the other between the first and the second movable element 3, and consequently the movement of one relative to the other (of the two movable elements) must occur according to a predetermined relationship. These drawings are described in more detail below.

According to another aspect, one between the first and the second movable elements 3, 4 is configured to be disposed at a retracted, away position P3 at least during the movement of the other between the first and the second movable elements 4, 3 from the pickup position P1 to the releasing position P2 of the articles A.

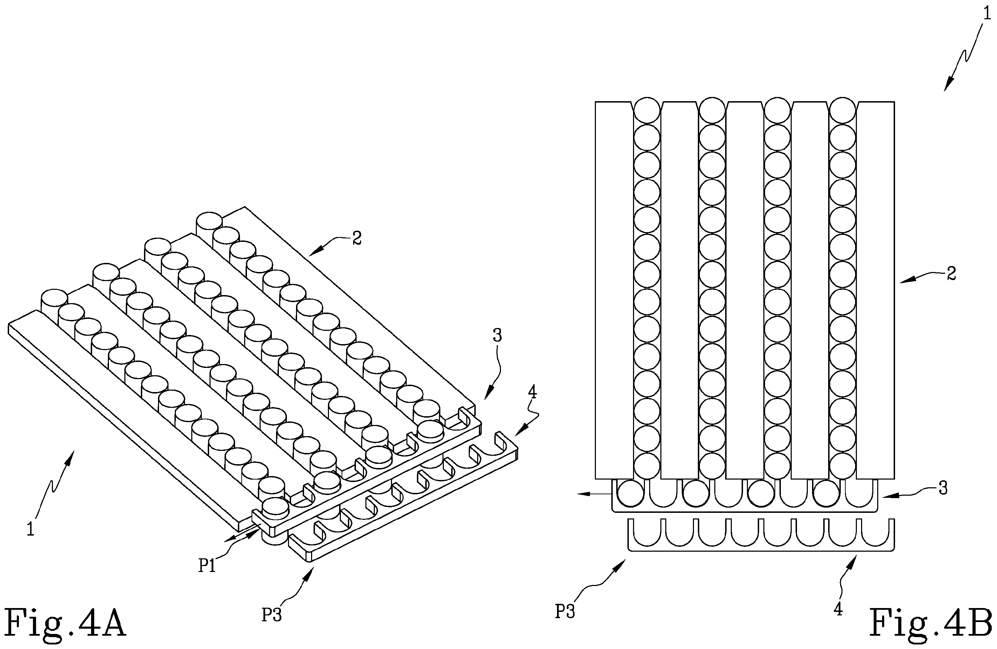

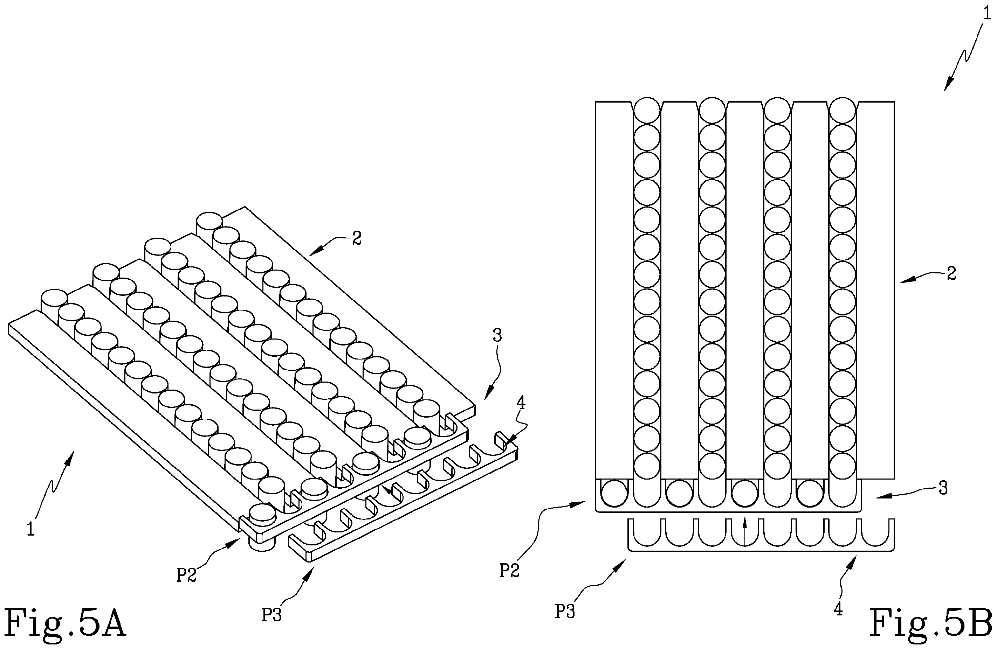

In practice, as shown in Figures 4A, 4B, 5A and 5B, when the first movable element 3 is moved from the pickup up position P1 to the releasing position P2 of the articles A, the second movable element 4 is in the retracted position P3. Similarly, when the second element 4 is moved from the pickup position P1 to the releasing position P2 of the articles A, the first movable element 3 is in the retracted position P3.

In that way, there is no interference between the first and second elements 3, 4, so that movement of the movable element (first or second) which has received the articles in the pickup position P1 is allowed towards the releasing position P2.

According to another aspect, preferably, the first movable element 3 and the second movable element 4 comprise a number of first and second seats S1, S2 at least equal to the number of feed lines L1, L2, L3, L4.

It should be noted that the first seats are subdivided into a first group S1A and into a second group S1B.

Similarly, the second seats are subdivided into a first group S2A and into a second group S2B.

The seats of the first group, first and second, S1A and S2A, are the seats designed to contain the articles to transfer them from the pickup position P1 to the releasing position P2.

On the other hand, the seats of the second group, first or second, S1B and S2B, of one of the two movable elements (3, 4) contain the articles A only at the pickup position P1, partly superposing over time with the seats of the first group, first or second, S1A and S2A, designed to receive and transfer the articles from the pickup position P1 to the releasing position P2.

In essence, the seats of the second group, first or second, S1B and S2B only temporarily receive the articles A and do not transfer the articles A received.

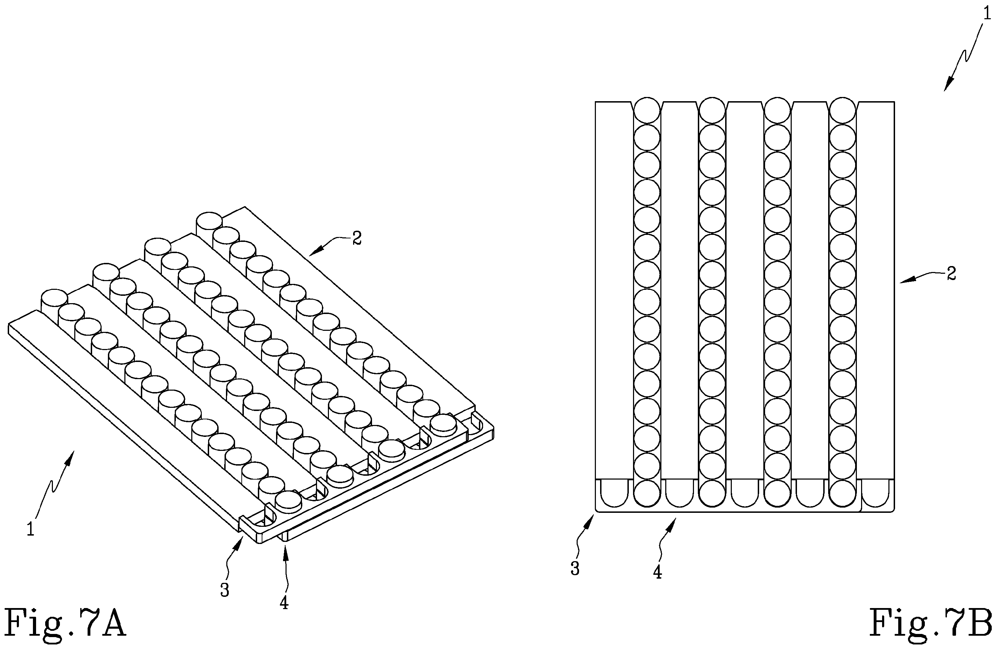

With reference to an article A, in fact, as shown in Figure 7, the article A is present, at a given moment in time, both in a seat of the second group (S1B, S2B) of one of the two movable elements (3, 4) and in a seat of the first group (S1A, S2A) of the other of the two movable elements (4, 3).

As shown in the drawings, the first movable element 3 and the second movable element 4 comprise a number of first and second seats S1, S2 equal to the number of feed lines L1, L2, L3, L4.

According to yet another aspect, the first movable element 3 and the second movable element 4 are identical to each other.

It should also be noted that the first movable element 3 and the second movable element 4 are shaped like prongs.

According to another aspect, one between the first and the second movable element 3, 4 is configured to be moved from the retracted, away position P3 to the article A receiving position P1 when the other between the first and the second movable element 4, 3 is disposed at the article A releasing position P2.

Basically, according to this aspect, when one of the two movable elements, first or second, is in the releasing position P2, the other is moved to the position P1 for picking up particles A.

In this way, an article arriving from the feed lines L1, L2, L3, L4 is received inside the seats (first or second) of the movable element (first or second) moved from the retracted position P3 away from the position P1 for picking up articles A.

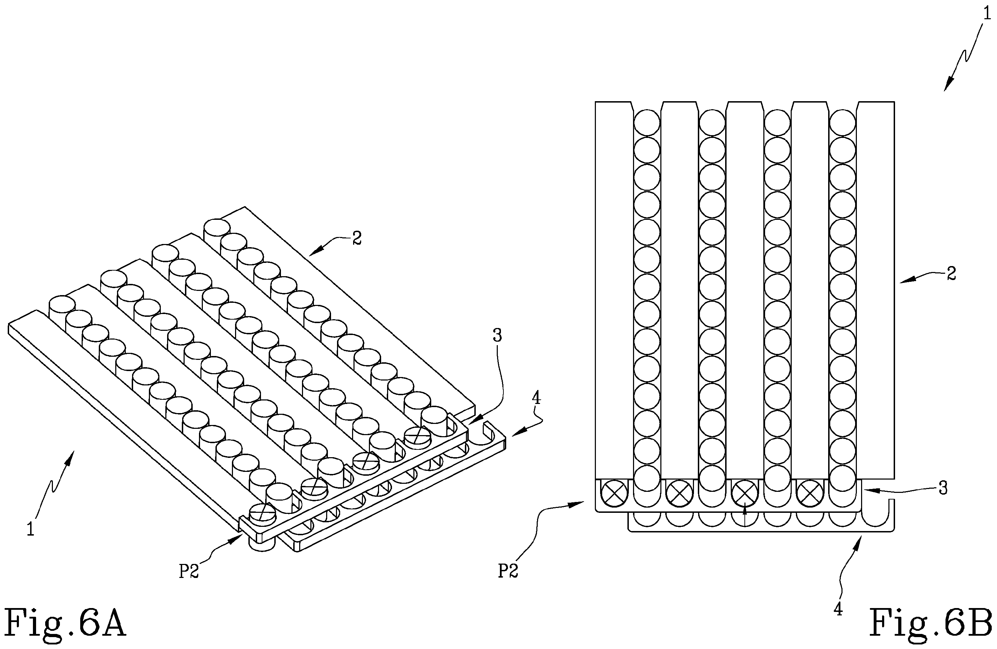

This aspect is illustrated in Figures 6A, 6B and 7A, 7B.

According to another aspect, the article A receiving position P1 and the article A releasing position P2 are the same for the first and the second movable elements 3, 4, even though they are offset in height.

In this way, advantageously, the picking up and the releasing of the articles A always occurs in the same plan position.

In particular, the fact that the articles A are always released in the same position, in plan view, makes it possible to prepare a pickup station ST which can always pick up the articles in the same position in plan view.

This is extremely advantageous, since it is possible to use, in the pickup station ST, pickup devices with standard mechanics, the repetitive movement of which does not need particularly sophisticated controls.

According to another aspect, the first and second seats S1, S2 are arcuate in shape.

According to yet another aspect, the first seats S1 are equispaced from each other and the second seats S2 are equispaced from each other.

It should also be noted that, preferably, the apparatus 1 comprises a control unit 5 and at least one actuating unit 6.

It should be noted that the actuating unit 6 is connected to the first and second movable elements 3, 4 to move them.

Figure 1 is a schematic plan view of the actuating unit 6.

For simplicity, the actuating unit 6 is only illustrated in the plan view of Figure 1.

According to an aspect, as illustrated in Figure 1, the actuating unit 6 may comprise at least a first actuating unit 6A, connected to the first movable element 3 for moving it, and a second actuating unit 6B, connected to the second movable element 4 for moving it.

It should be noted that the first and/or the second actuating units 6A, 6B may comprise one or more actuators, for example as illustrated in Figure 1 an actuator for moving along the direction X and an actuator for moving along the direction Y.

According to another aspect, a system is defined for moving articles A comprising the apparatus 1 for feeding the articles A described above and a pickup station ST.

The pickup station ST comprises a plurality of pickup devices (not illustrated), operating at the article A releasing position P2, to pick up articles from the first seats S1 or second seats S2 disposed at the above-mentioned article A releasing position P2.

It should be noted that the movement system forms part of a packaging apparatus.

Preferably, the articles A are caps of bottles.

The invention also relates to a method for feeding articles A to a pickup station ST, comprising the following steps:
- providing a first movable element 3 having a plurality of first seats S1 for receiving articles A and configured to be moved along a first path PS1;
- providing a second movable element 4 having a plurality of second seats S2 for receiving articles A and configured to be moved along a second path PS2 at least partly (preferably entirely) overlapping the first path PS1;
- feeding articles in sequence along a plurality of parallel feed lines L1, L2, L3, L4 along a conveying direction X;
- moving the first and the second movable element 3, 4 in sync, sideways and along the conveying direction X relative to the terminal ends T1, T2, T3, T4 of the feed lines L1, L2, L3, L4, between:
   - an article A receiving position P1 where articles A can be picked up by terminal ends T1, T2, T3, T4 of the feed lines L1, L2, L3, L4;
   - an article releasing position P2, disposed laterally with respect to the article pickup position P1, where articles can be released to the pickup station ST;
   - a retracted position P3 away along the conveying direction X with respect to the terminal ends T1, T2, T3, T4 (and of non-interference between the first and second movable elements 3, 4).

According to another aspect, the step of moving the first and the second movable element 3, 4 in sync comprises the step of disposing one between the first and the second movable element 3, 4 at the retracted, away position P3 at least during the movement of the other between the first and the second movable element 4 ,3 from the pickup position P1 to the releasing position P2 of the articles A.

According to another aspect, the step of moving the first and the second movable element 3, 4 in sync, sideways and along the conveying direction X relative to the terminal ends T1, T2, T3, T4 of the feed lines L1, L2, L3, L4 comprises a step of moving the first and the second movable element 3, 4 in sequence, respectively to the article A receiving position P1, to the article releasing position P2 and to the retracted, away position P3.

According to another aspect, the step of moving the first and the second movable elements 3, 4 in sync, sideways and along the conveying direction X relative to the terminal ends T1, T2, T3, T4 of the feed lines L1, L2, L3, L4 comprises a step of moving one between the first and the second movable elements 3, 4 from the retracted position P3 to the article A receiving position P1 when the other between the first and the second movable elements 4, 3 is disposed at the article A releasing position P2.

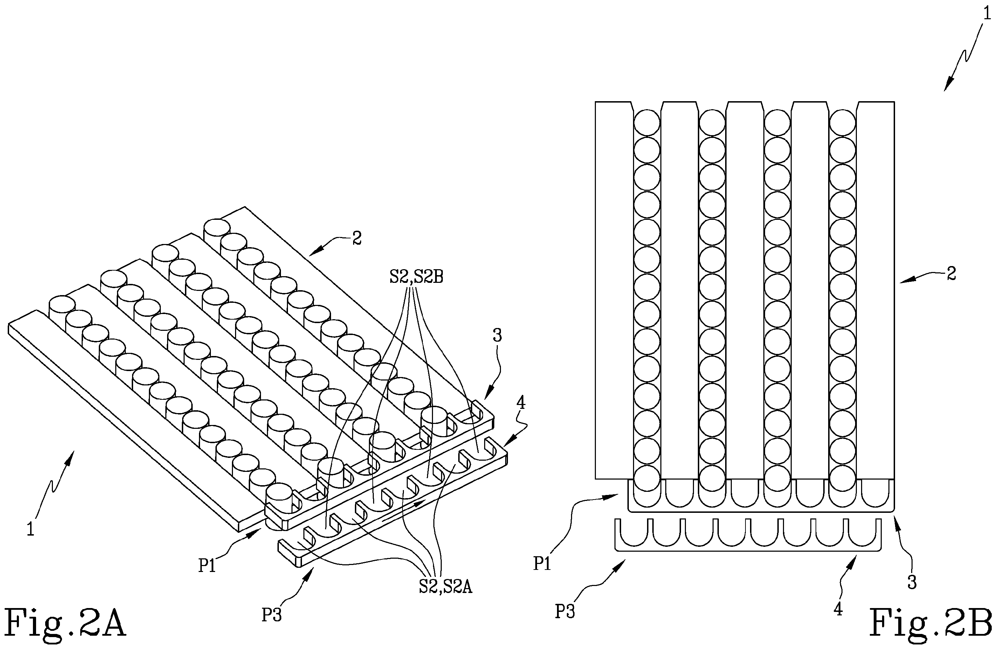

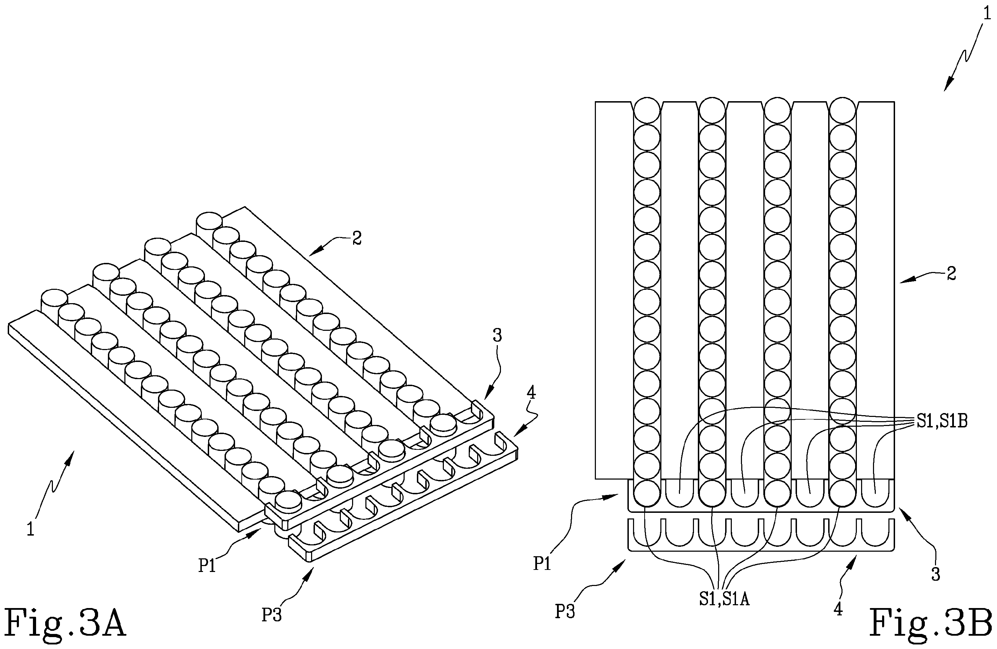

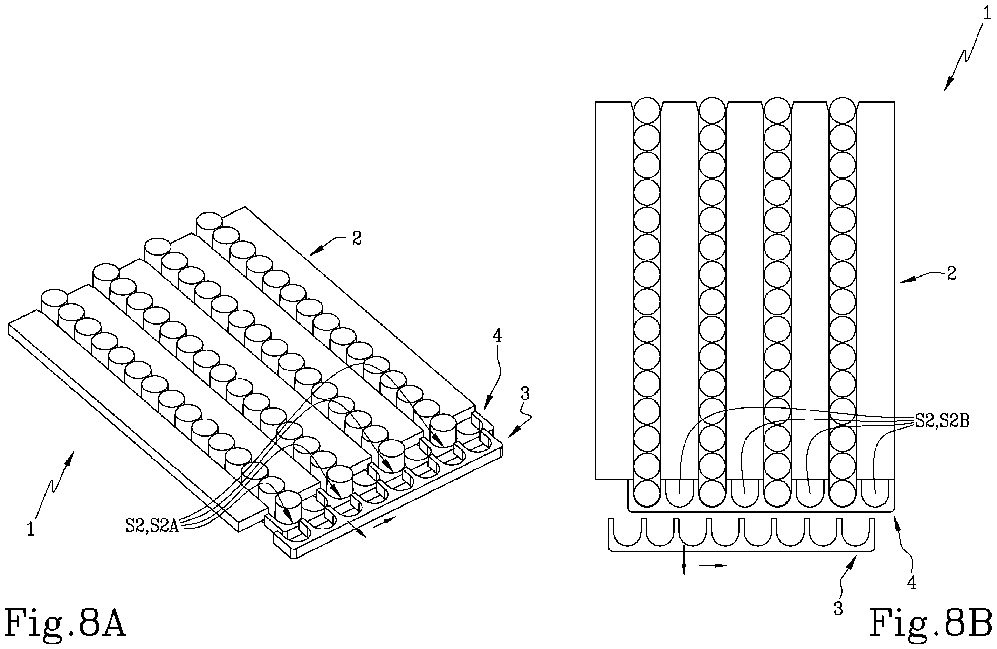

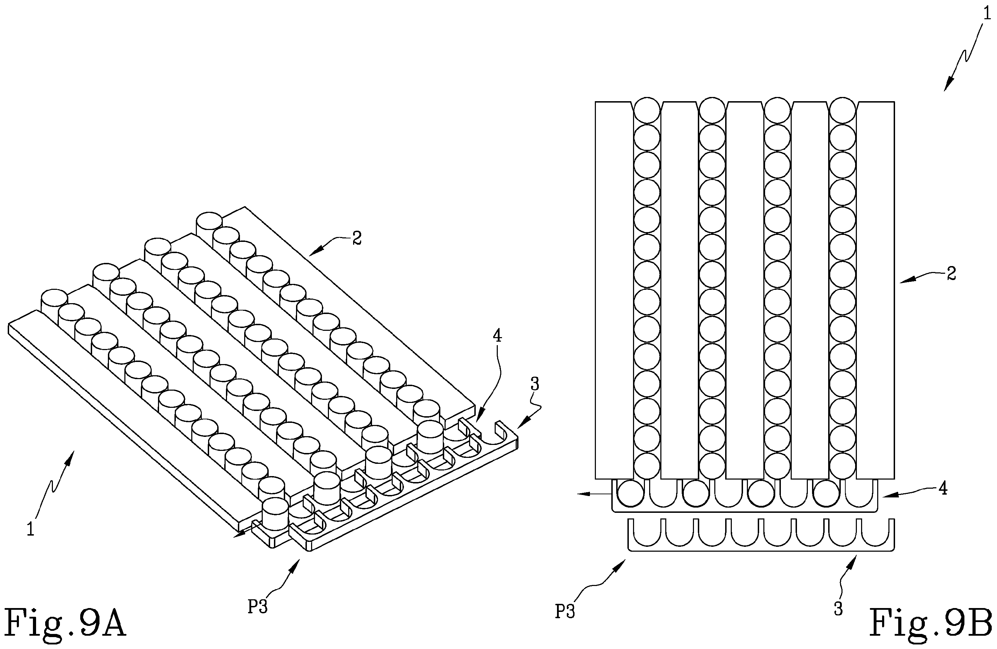

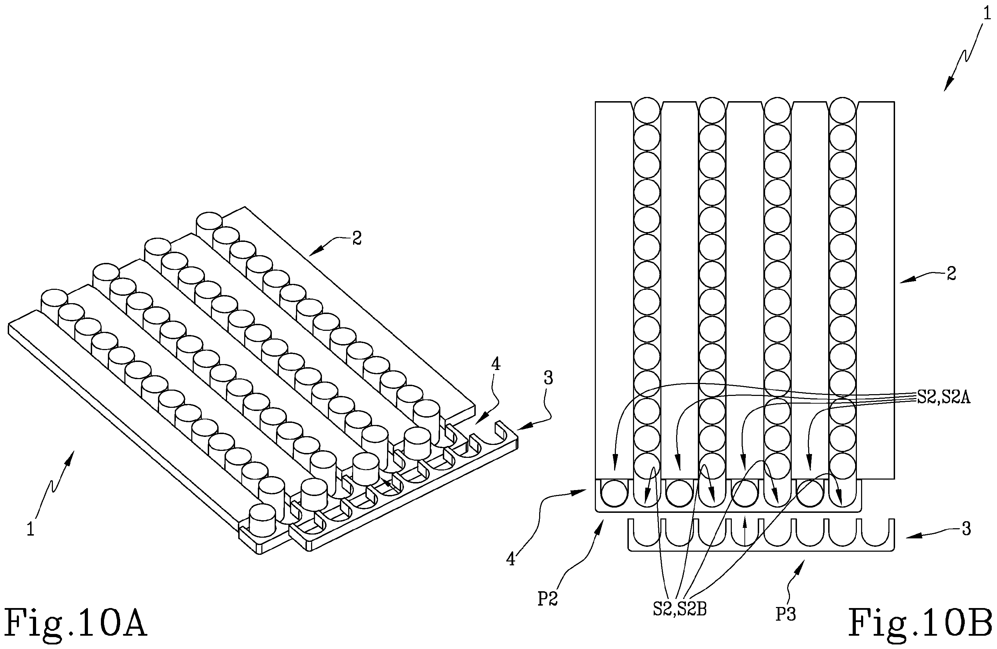

According to yet another aspect, the step of moving the first and the second movable element 3, 4 in sync, sideways and along the conveying direction X relative to the terminal ends T1, T2, T3, T4 of the feed lines L1, L2, L3, L4 comprises cyclically repeating the following operating sequence:
- disposing the first movable element 3 at the article A receiving position P1 and disposing the second movable element 4 at the retracted position P3 (Figure 1);
- receiving articles A in the first seats S1 of the first movable element 3 disposed at the article A receiving position P1 (Figures 2A, 2B, 3A, 3B);
- moving the first movable element 3 from the article A receiving position P1 to the article releasing position P2 (Figures 4A and 4B);
- moving the second movable element 4 from the retracted position P3 to the article A receiving position P1 (Figures 5A, 5B and 6A, 6B);
- receiving articles A in the second seats S2 of the second movable element 4 disposed at the article A receiving position P1 (Figures 7A and 7B);
- moving the first movable element 3 from the article A releasing position P2 to the retracted position P3 (Figures 8A and 8B);
- moving the second movable element 4 from the article A receiving position P1 to the article releasing position P2 (Figure 9A, 9B and 10A, 10B).

According to another aspect, the method comprises a step of picking up the articles A from the first seats S1 after the step of moving the first movable element 3 from the position P1 for receiving articles A to the position P2 for releasing articles (Figures 6A, 6B).

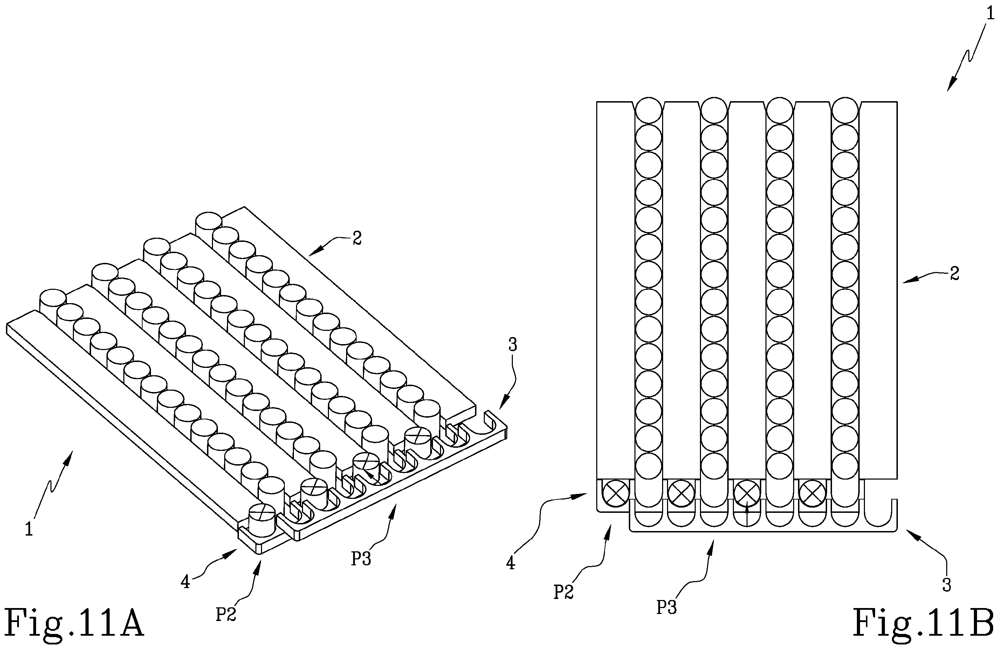

According to another aspect, the method comprises a step of picking up the articles A from the second seats S2 after the step of moving the second movable element 4 from the position P1 for receiving articles A to the position P2 for releasing articles (Figures 11A, 11B).

It should be noted, therefore, that cyclically, according to the method, the first element 3 and the second element 4 occupy the article A receiving P1, the article A releasing position P2 and the retracted position P3.

It should be noted that the motion of the first element 3 and of the second element 4 is a motion along a closed path (PS1, PS2) between these positions.

More specifically, the first element 3 and the second element 4 are configured to move along a rectangular path, wherein there are two lateral movements (one in the direction from the position P1 for receiving articles A to the position P2 for releasing articles A and another in a direction parallel to the direction from the position P2 for releasing articles A to the position P1 for receiving articles A) and two movements in the direction X for conveying the articles A in the feed lines L1, L2, L3, L4 (one away from the terminal ends T1, T2, T3, T4 and another towards the terminal ends).

It should be noted that the first and second movable elements (3, 4) are each movable along a respective closed path PS1, PS2; the closed paths PS1, PS2 are offset from each other in height.

According to yet another aspect, the step of moving the first and the second movable elements 3, 4 in sync, sideways and away from the terminal ends T1, T2, T3, T4 of the feed lines L1, L2, L3, L4 comprises cyclically repeating the following movement sequence along a respective closed conveying path (PS1, PS2), for each of the first and second moveable elements 3, 4:
- moving the first or the second movable element (3, 4) along a first stretch K1 of the conveying path sideways relative to the feed lines L1, L2, L3, L4 in the direction from the article A pickup position P1 to the article A releasing position P2;
- moving the first or the second movable element (3, 4) along a second stretch K2 of the conveying path away (along the conveying direction X) from the terminal ends T1, T2, T3, T4 of the feed lines L1, L2, L3, L4 (along the article A conveying direction X);
- moving the first or the second movable element (3, 4) along a third stretch K3 of the conveying path sideways relative to the feed lines L1, L2, L3, L4 in a direction parallel to the direction from the article A releasing position P2 to the article A receiving position P1;
- moving the first or the second movable element (3, 4) along a fourth stretch K4 of the conveying path towards (along the conveying direction X) the terminal ends T1, T2, T3, T4 of the feed lines L1, L2, L3, L4 (along the article A conveying direction X).

According to another aspect, the step of cyclically repeating the above-mentioned motion sequence along a respective closed conveying path (PS1, PS2) comprises moving (for each moment in time) the first and the second movable elements (3, 4) along different stretches K1, K2, K3, K4 of the path.

It should be noted that the conveying paths PS1, PS2 of the first and second movable elements (3, 4) are preferably superposed on each other, that is to say, positioned at different heights.

Basically, the first and second movable elements 3, 4 are designed for being moved on planes which are offset from each other in height, that is to say, in a direction Z at right angles to the feed direction X and at right angles to the lateral direction Y.

The first and second movable elements 3, 4 are configured relative to each other in such a way that, during their motion along the respective closed paths, they do not interfere with each other.

It should also be noted that the first and second movable elements 3, 4 are configured relative to each other in such a way that they move on stretches (K1, K2, K3, K4) of the path different to each other, that is to say, when the first element 3 is on a certain stretch of the path (for example, the first K1), the second element 4 is on a different stretch of the path.

For this reason, the step of cyclically repeating the above-mentioned motion sequence along a respective closed conveying path (PS1, PS2) comprises moving the first and the second movable elements (3, 4) along different stretches (K1, K2, K3, K4) of the path.

It should be noted, in particular, that the first and second movable elements 3, 4 are configured relative to each other in such a way that when one between the first and second movable elements 3, 4 engages the first stretch K1 of the movement path, the other between the second and first movable elements 4, 3 is positioned in the third stretch K3 of the path.

It should be noted that in Figures 6A, 6B and 11A and 11B some articles A have an "X" at the top: these articles A are being picked up by the pickup station ST and have therefore only been illustrated for convenience in that position, being able to also be in a different position.

## Claims

1. An apparatus (1) for feeding articles (A) to a pickup station (ST), comprising:
- a conveyor (2) comprising a plurality of parallel feed lines (L1, L2, L3, L4), each feed line (L1, L2, L3, L4) being configured to convey a plurality of sequentially disposed articles (A) along a conveying direction (X) and being provided with a respective terminal end (T1, T2, T3, T4);
- a first movable element (3), disposed at the terminal end of the feed lines (L1, L2, L3, L4) and provided with a plurality of first seats (S1) for receiving articles (A);
- a second movable element (4), disposed at the terminal end of the feed lines (L1, L2, L3, L4) and provided with a plurality of second seats (S2) for receiving articles (A),
the first and the second movable element (3, 4) being configured to move in sync sideways and away from each other along the conveying direction (X) relative to the terminal ends (T1, T2, T3, T4) of the feed lines (L1, L2, L3, L4), on paths (PS1, PS2) which at least partly overlap, to allow picking up articles (A) from the feed lines (L1, L2, L3, L4) at an article (A) receiving position (P1), and to allow releasing articles (A) to the pickup station (ST) at an article (A) releasing position (P2) located laterally with respect to the article (A) receiving position (P1),
one between the first and the second movable element (3, 4) being configured to be disposed at a retracted, away position (P3) at least during the movement of the other between the first and the second movable element (4,3) from the pickup position (P1) to the releasing position (P2) of the articles (A).

2. The feeding apparatus (1) according to the preceding claim, wherein the first movable element (3) and the second movable element (4) comprise a number of first and second seats (S1, S2) at least equal to the number of feed lines (L1, L2, L3, L4).

3. The feeding apparatus (1) according to either of the preceding claims, wherein the first movable element (3) and the second movable element (4) are identical.

4. The feeding apparatus (1) according to any one of the preceding claims, wherein one between the first and the second movable element (3, 4) is configured to be moved from the retracted, away position (P3) to the article (A) receiving position (P1) when the other between the first and the second movable element (4,3) is disposed at the article (A) releasing position (P2).

5. The feeding apparatus (1) according to any one of the preceding claims, wherein the article (A) receiving position (P1) and the article (A) releasing position (P2) are, when observed in a plan view, the same for the first and the second movable element (3, 4).

6. The feeding apparatus (1) according to any one of the preceding claims, wherein the first and second seats (S1, S2) have an arcuate shape.

7. The feeding apparatus (1) according to any one of the preceding claims, wherein the first seats (S1) are equispaced from each other and the second seats (S2) are equispaced from each other.

8. The feeding apparatus (1) according to any one of the preceding claims, comprising a control unit (5) and at least one actuating unit (6), the actuating unit (6) being connected to the first and second movable elements (3, 4) to move them.

9. The feeding apparatus (1) according to any one of the preceding claims, wherein the first seats (S1) are subdivided into a first group (S1A) and a second group (S1B) and wherein the second seats (S2) are subdivided into a first group (S2A) and a second group (S2B), the seats of the first groups (S1A, S2A) of first and second seats being adapted to contain the articles (A) to transfer them from the receiving position (P1) to the releasing position (P2), the first and the second movable element (3, 4) being moved in such a way that the seats of the second groups (S1B, S2B) of first and second seats of one of the two movable elements (3, 4) contain the articles (A) only at the receiving position (P1) where they temporarily partly overlap the seats of the first and second groups (S1A, S2A) of first and second seats.

10. The feeding apparatus (1) according to any one of the preceding claims, wherein the first and the second movable element (3, 4) are configured to move in sync so as to cyclically repeat the following operating sequence:
- disposing the first movable element (3) at the article (A) receiving position (P1) and disposing the second movable element (4) at the retracted position (P3);
- moving the first movable element (3) from the article (A) receiving position (P1) to the article releasing position (P2);
- moving the second movable element (4) from the retracted position (P3) to the article (A) receiving position (P1);
- moving the first movable element (3) from the article (A) releasing position (P2) to the retracted position (P3);
- moving the second movable element (4) from the article (A) receiving position (P1) to the article releasing position (P2).

11. The feeding apparatus (1) according to any one of the preceding claims, wherein the first and the second movable element (3, 4) are each configured to be moved along a respective closed conveying path (PS1, PS2) according to the following motion sequence:
- moving the first or the second movable element (3, 4) along a first stretch (K1) of the conveying path sideways relative to the feed lines (L1, L2, L3, L4) from the article (A) receiving position (P1) to the article (A) releasing position (P2);
- moving the first or the second movable element (3, 4) along a second stretch (K2) of the conveying path away from the terminal ends (T1, T2, T3, T4) of the feed lines (L1, L2, L3, L4) along the article (A) conveying direction (X);
- moving the first or the second movable element (3, 4) along a third stretch (K3) of the conveying path sideways relative to the feed lines (L1, L2, L3, L4) in a direction parallel to the direction from the article (A) releasing position (P2) to the article (A) receiving position (P1);
- moving the first or the second movable element (3, 4) along a fourth stretch (K4) of the conveying path towards the terminal ends (T1, T2, T3, T4) of the feed lines (L1, L2, L3, L4) along the article (A) conveying direction (X).

12. The feeding apparatus (1) according to the preceding claim, wherein the step of cyclically repeating the aforementioned motion sequence along a respective closed conveying path (PS1, PS2) comprises moving the first and the second movable element (3, 4) along different stretches (K1, K2, K3, K4) of the path.

13. A system for moving articles (A), comprising the apparatus (1) for feeding the articles (A) according to any one of the preceding claims, and a pickup station (ST), comprising a plurality of pickup devices, operating at the article (A) releasing position (P2), to pick up articles from the first seats (S1) or second seats (S2) disposed at the article (A) releasing position (P2).

14. A method for feeding articles (A) to a pickup station (ST), comprising the following steps:
- providing a first movable element (3) having a plurality of first seats (S1) for receiving articles (A) and configured to be moved along a first path (PS1);
- providing a second movable element (4) having a plurality of second seats (S2) for receiving articles (A) and configured to be moved along a second path (PS2) at least partly overlapping the first path (PS1);
- feeding articles in sequence along a plurality of parallel feed lines (L1, L2, L3, L4) along a conveying direction (X);
- moving the first and the second movable element (3, 4) in sync, sideways and along the conveying direction (X) relative to the terminal ends (T1, T2, T3, T4) of the feed lines (L1, L2, L3, L4), between:
- an article (A) receiving position (P1) where articles (A) can be picked up by terminal ends (T1, T2, T3, T4) of the feed lines (L1, L2, L3, L4);
- an article releasing position (P2), disposed laterally with respect to the article pickup position (P1), where articles can be released to the pickup station (ST);
- a retracted position (P3) away from the terminal ends (T1, T2, T3, T4) along the conveying direction (X);
and wherein the step of moving the first and the second movable element (3, 4) in sync comprises the step of disposing one between the first and the second movable element (3, 4) at the retracted, away position (P3) at least during the movement of the other between the first and the second movable element (4,3) from the pickup position (P1) to the releasing position (P2) of the articles (A).

15. The method according to the preceding claim, wherein the step of moving the first and the second movable element (3, 4) in sync, sideways and along the conveying direction (X) relative to the terminal ends (T1, T2, T3, T4) of the feed lines (L1, L2, L3, L4) comprises a step of moving the first and the second movable element (3, 4) in sequence, respectively to the article (A) receiving position (P1), to the article releasing position (P2) and to the retracted, away position (P3).

16. The method according to claim 14 or 15, wherein the step of moving the first and the second movable element (3, 4) in sync, sideways and along the conveying direction (X) relative to the terminal ends (T1, T2, T3, T4) of the feed lines (L1, L2, L3, L4) comprises a step of moving one between the first and the second movable element (3, 4) from the retracted position (P3) to the article (A) receiving position (P1) when the other between the first and the second movable element (4,3) is disposed at the article (A) releasing position (P2).

17. The method according to claim 14 to 16, wherein the step of moving the first and the second movable element (3, 4) in sync, sideways and along the conveying direction (X) relative to the terminal ends (T1, T2, T3, T4) of the feed lines (L1, L2, L3, L4) comprises cyclically repeating the following operating sequence:
- disposing the first movable element (3) at the article (A) receiving position (P1) and disposing the second movable element (4) at the retracted position (P3);
- receiving articles (A) in the first seats (S1) of the first movable element (3) disposed at the article (A) receiving position (P1);
- moving the first movable element (3) from the article (A) receiving position (P1) to the article releasing position (P2);
- moving the second movable element (4) from the retracted position (P3) to the article (A) receiving position (P1);
- receiving articles (A) in the second seats (S2) of the second movable element (4) disposed at the article (A) receiving position (P1);
- moving the first movable element (3) from the article (A) releasing position (P2) to the retracted position (P3);
- moving the second movable element (4) from the article (A) receiving position (P1) to the article releasing position (P2).

18. The method according to the preceding claim, comprising a step of picking up the articles (A) from the first seats (S1) after the step of moving the first movable element (3) from the article (A) receiving position (P1) to the article releasing position (P2), and a step of picking up the articles (A) from the second seats (S2) after the step of moving the second movable element (4) from the article (A) receiving position (P1) to the article releasing position (P2).

19. The method according to any one of claims 14 to 18, wherein the step of moving the first and the second movable element (3, 4) in sync, sideways and along the conveying direction (X) relative to the terminal ends (T1, T2, T3, T4) of the feed lines (L1, L2, L3, L4) comprises a step of cyclically repeating the following motion sequence along a respective closed conveying path (PS1, PS2) for each of the first and the second movable element (3, 4):
- moving the first or the second movable element (3, 4) along a first stretch (K1) of the conveying path sideways relative to the feed lines (L1, L2, L3, L4) in the direction from the article (A) receiving position (P1) to the article (A) releasing position (P2);
- moving the first or the second movable element (3, 4) along a second stretch (K2) of the conveying path along the conveying direction (X) away from the terminal ends (T1, T2, T3, T4) of the feed lines (L1, L2, L3, L4);
- moving the first or the second movable element (3, 4) along a third stretch (K3) of the conveying path sideways relative to the feed lines (L1, L2, L3, L4) in a direction parallel to the direction from the article (A) releasing position (P2) to the article (A) receiving position (P1);
- moving the first or the second movable element (3, 4) along a fourth stretch (K4) of the conveying path along the conveying direction (X) towards the terminal ends (T1, T2, T3, T4) of the feed lines (L1, L2, L3, L4).

20. The method according to the preceding claim, wherein the step of cyclically repeating the aforementioned motion sequence along a respective closed conveying path (PS1, PS2) comprises moving the first and the second movable element (3, 4) along different stretches (K1, K2, K3, K4) of the path.
